# EUROPEAN PATENT SPECIFICATION

(11) **EP 2 712 854 B1**
(45) Date of publication and mention of the grant of the patent: **05.12.2018**
(21) Application number: 13186570.1
(22) Date of filing: 30.09.2013
(51) Int. Cl.: C04B 28/02, C04B 30/00, H02G 15/00

(54) **A POWDER COMPOSITION AND SLURRY FOR PREPARING HEAT CONDUCTING MATERIALS**
PULVERZUSAMMENSETZUNG UND AUSCHLÄMMUNG ZUR HERSTELLUNG VON WÄRMELEITENDEN MATERIALIEN
COMPOSITION DE POUDRE ET BOUE POUR PRÉPARER DES MATÉRIAUX THERMOCONDUCTEURS

(30) Priority: 01.10.2012 EP 12186852
(43) Date of publication of application: 02.04.2014
(73) Proprietor: Dantonit A/S, 5250 Odense S (DK)
(72) Inventor: Jelling Pedersen, Annika, 7080 Borkop (DK)
(74) Representative: Brann AB

(56) References cited:
- EP-A2- 1 065 451
- DE-B4- 19 964 341
- US-A1- 2003 188 666
- US-A1- 2005 166 802
- US-A1- 2012 184 468
- US-B1- 6 258 160
- FABIEN DELALEUX ET AL: "Enhancement of geothermal borehole heat exchangers performances by improvement of bentonite grouts conductivity", APPLIED THERMAL ENGINEERING, PERGAMON, OXFORD, GB, vol. 33, 6 September 2011 (2011-09-06), pages 92-99, XP028330476, ISSN: 1359-4311, DOI: 10.1016/J.APPLTHERMALENG.2011.09.017 [retrieved on 2011-09-18]

## Description

### Technical field of the Invention

The present invention relates generally to the field of heat conducting surface coating materials. Further, the present invention relates specifically to the field of heat conducting surface coating materials for thermal regulation of underground and submerged power distribution cables. The present invention is directed towards a powder composition and slurry for preparing such heat conducting surface coating materials, i.e. a dry powder from which slurry is prepared by mixing the powder with water prior to its installation as a heat conducting material.

### Background of the Invention

State of the art industrial size power distribution cable installations for underground or submarine applications comprises a power cable and a wider diameter surrounding, conduit, sleeve pipe, channel, or the like. Thus, in such installation there is an open space or gap between the power cable and the surrounding pipe. When this space or gap if filled with air it acts insulating, adversely affecting the transfer/removal of heat from the power cable.

Industrial size power distribution cables generate considerable heat when electricity flows through the conductors of the power distribution cable. All power cables are designed to allow a predetermined maximum working temperature, specified by the producer. If the generated heat is not adequately transferred from the power cable to the ambient environment, it causes the temperature of the power cable to rise, and this will reduce considerably the current-carrying capacity, or effective load capacity, of the power cable.

Thus, the immediate thermal environment surrounding an underground or submerged power distribution cable is of great significance with regard to the current-carrying capacity as well as life expectancy of said power cable. Thereto a low as possible power cable temperature is desirable since emitted heat is a loss of electric energy during transmission, which must be paid for.

Therefore, heat conducting infill materials are used in the gap between the power cable and pipe in order to ensure adequate heat transfer from the power cable to the pipe and further to the surroundings. The heat conducting infill material, or heat conducting surface coating material, has a higher heat conducting capacity than air and as such helps to keep the power cable temperature within the specified working temperature range.

Moderate increases in temperature can be accepted provided they are within the range for which the power cable is designed. Temperatures above the predetermined maximum working temperature shorten power cable life and reduce the current-carrying capacity, which result in a considerably increase in costs for power distribution. Too high power cable temperatures may even lead to irreversible failures, resulting in that the power cable must be replaced or repaired. Power cables for underground and submerged applications are at least several hundreds of meter long and are very costly per unit length. In many applications an intermediate coupling will increase costs considerably and therefore efforts are made to install as few as possible. A failure somewhere along the length of the power cable results in that the entire cable length between couplings must be replaced, or be removed in order to be repaired.

One state of the art solution, for power distribution cables for underground or underwater applications, is to use a a power cable having conductors with over dimensioned diameter in order to compensate for inefficient heat transfer from the power cable to the surrounding environment/material. The over dimensioned power cable will not generate as much heat at a given distribution level, and thereto the envelope surface of the conductors are increased which promote heat transfer somewhat. However, the use of over dimensioned power cables lead to unacceptable increases in costs.

An alternative solution used in the art is to use the originally specified dimension of the power cable but provide a better heat transfer envelope installed in the space between the power cable itself and the sleeve pipe. It is known in the art that a better heat transfer can be obtained by using a heat conducting material enclosing the power cable. In underground or underwater/submerged applications the heat conducting material is constituted by pumpable slurry that is pumped into the gap between the power cable and the surrounding pipe. The pumpable slurry comprises heat conducting solids suspended in a liquid. The slurry is formulated to set at a predetermined time and the mature heat conducting infill material provide adequate heat conductivity as well as physical support for the power cable inside the sleeve pipe.

Known infill materials consist mainly of silica sand, but a major disadvantage is that these known infill materials can only be used in installations not longer than a few tens of meters, otherwise the setting of the infill material will not be homogeneous along the length and width of the power cable/pipe installation.

In order to increase the pumping ability of slurries with a high content of solids, bentonite and/or other flow enhancing materials are usually added. The addition of bentonite and/or synthetic flow enhancers increase the pumping ability but both synthetics and bentonite will adversely affect the heat transfer capability of the heat conducting material. Alternatives in the form of other bulk infill materials, such as quartz flour and/or minerals with high heat conductivity, such as magnetite, calcite or solid rock such as fragments of limestone and iron ores, can be used, but all these additives give rise to decreasing pumping ability of the slurry. Synthetic additives in the form of polymers, dispersing agents like ligno sulphates, or the like are undesirable or can only be accepted in very small concentrations due to environmental concerns, i.e. the risk of contaminating the ground water and affecting living organisms.

Pumping slurries for long distances require high pressure pumps as slurries tend to settle and block pipes at some distance from the pumping head. Synthetic pumping aids may to some degree compensate for this but are as mentioned undesirable due to environmental concerns or not sufficiently effective. Alternatively, the solids content or its relative composition with addition of more bentonite in the pumped material is possible, but this has a negative effect on the heat conducting properties of the mature heat conducting material.

US20030188666A1 discloses a grout for use in a borehole of an earth energy transfer system between the exterior of an earth loop in the borehole and an interior wall of the borehole comprises sand, cement present in particles, water, and material creating a repelling electrostatic charge on cement particles for reducing friction of the grout. The system has an energy transfer fluid moving through the loop for transferring energy with respect to the earth. US20050166802A1 discloses a grout composition containing specified amounts of calcium bentonite, sodium bentonite, silica material, and carbon source. EP1065451A2 discloses a filling material for a ground heat transmitter comprises up to 50 per cent by weight of powder or granulate-form graphite or distended graphite with granule sizes between 0.001mm and 1 mm.

Thus, in applications where the power cable is arranged in long sleeve pipes, up to at least a couple of hundreds of meters in length, located underground or submerged at sea, known heat conducting materials having low enough thermal resistivity are impossible to pump over long distances due to high viscosity, settling solids at distance, required pumping pressure too high compared to material strength of sleeve pipe, inner surface rheology of sleeve pipe giving rise to flow disturbances, or abrasion damages, all in all restricting technically possible pumping distances. Measures to overcome above mentioned difficulties of pumping heat conducting solids over long distances in pipes located underground or submerged at sea, have instead inadequate heat conducting properties to meet the requirements for heat transfer from the power cable.

### Object of the Invention

The present invention aims at obviating the aforementioned disadvantages and failings of previously known heat conducting materials, and at providing an improved powder composition and slurry for preparing heat conducting materials. A primary object of the present invention is to provide an improved powder composition and slurry of the initially defined type for heat conducting materials that has high enough heat conductivity and at the same time has flow properties enabling it to be pumped over long distances in pipes located underground or submerged at sea.

It is another object of the present invention to provide a powder composition suitable for preparing and maintaining the slurry in a workable condition for at least 4 hours.

It is another object of the present invention to retain a stable composition throughout the length of the installed length of the power cable of at least 800 meters.

It is another object of the invention to provide a powder composition for the preparation of slurry which after setting remains compositionally stable retaining sufficient heat conducting properties over time and providing mechanical stability to the power cable /sleeve pipe installation.

It is another object of the present invention to provide a powder composition and slurry having a high ability to accommodate high water content while retaining setting properties, in order to provide high heat conductivity and reducing the need for high pumping pressures.

It is yet another object of the present invention to provide a powder composition and slurry ensuring very low or no environmental impact on surrounding natural materials.

### Summary of the Invention

According to the invention at least the primary object is attained by means of the initially defined powder composition and slurry having the features defined in the independent claims. Preferred embodiments of the present invention are further defined in the dependent claims.

According to a first aspect of the present invention, there is provided a powder composition of the initially defined type, wherein the powder composition, with reference to its composition comprises the following components, in weight-% of the powder composition: 65-80 weight-% quartz sand having a grain size within the range 0-2 mm, 10-18 weight-% graphite, 2-8 weight-% cement, 2-10 weight-% bentonite powder, and 0-2 weight-% additive, wherein the amounts of the components together being 100%. According to a second aspect of the present invention, there is provided a slurry wherein the slurry, with reference to its composition, comprises the following components, in weight-% of the slurry: 34-38 weight-% water, and 62-66 weight-% of the inventive powder composition.

Thus, the present invention is based on the insight that the inventive composition result in a low viscosity of the slurry which admit the slurry to be pumped over long distances, and result in a high heat conductivity of the mature heat conducting material which secure adequate heat transfer from the power cable.

Further advantages with and features of the invention will be apparent from the other dependent claims as well as from the following detailed description of preferred embodiments.

### Detailed description of preferred embodiments of the invention

In underground or underwater/submerged applications the power distribution cable is arranged in a conduit, pipe, channel, or the like. If the gap between the power cable and the pipe is not filled with an infill material, air will enclose the power cable and air has a heat conductivity that is too low for the power cable to function adequately without running the risk of getting over heated.

The present invention relates to a powder composition and slurry, also known as grout, to be used as a heat conducting material enclosing the power cable. The heat conducting material is intended to be used for thermal regulation of underground and underwater power distribution cables, in order to provide accurate temperature control of the power cable. The heat conducting material is provided as a ready to mix dry powder composition, which is mixed with water in order to obtain a slurry, or grout. The water is constituted by fresh water, tap-water, distilled water, or the like, having a pH-value in the range of 6 to 8, preferably about 7.

It is important that the slurry is thoroughly mixed in order to obtain homogeneous slurry having high and consistent heat conducting properties as well as setting properties, i.e. a slurry having homogeneity of solids content throughout the length of the infilled section. The slurry is pumped into the pipe along the power cable in order to enclose the entire power cable. The inventive slurry is homogeneous and has a low viscosity and can be pumped up to at least 800 meters into the pipe. After thorough mixing, the slurry remains pumpable for about 4 hours, thereafter the slurry begins to set and after about 5 days the slurry has harden to solid consistency. This entail that the cost of establishing a power distribution cable connection, in which the power cable is arranged in a pipe and is surrounded by a heat conducting material, is significantly decreased.

The set heat conducting material remains intact over time and retains some flexibility thereby providing a durable mechanical protection of the power cable, in order to withstand environmental inflictions such as ground movements, which ensures a long power cable life.

If the power cable needs to be removed from the conduit, the heat conducting material can first be removed be using a high pressure washing device. Thereafter the power cable can be replaced, or removed in order to be repaired, and the pipe can be reused. The thermal conductive material does not decompose, since it is constituted by natural and stable components, and thereby it is also environmental friendly.

According to the invention the powder composition with reference to its composition comprises the following components, in weight-% of the powder composition: 65-80 weight-% quartz sand having a grain size within the range 0-2 mm, 10-18 weight-% graphite, 2-8 weight-% cement, 2-10 weight-% bentonite powder, and 0-2 weight-% additive, wherein the amount of the components together being 100%. Preferably the powder composition with reference to its composition comprises, in weight-% of the powder composition: 70-80 weight-% quartz sand having a grain size within the range 0-2 mm, 13-17 weight-% graphite, 2-8 weight-% cement, 2-8 weight-% bentonite powder, and 0-2 weight-% additive, wherein the amount of the components together being 100%.

In a first preferred embodiment the powder composition comprises, in weight-% of the powder composition, 70-80 weight-% quartz sand. In a second preferred embodiment the powder composition comprises, in weight-% of the powder composition, 65-80 weight-% quartz sand. The quartz sand has preferably a grain size ≤ 1mm and a quartz content ≥ 98%. Quarts sand particles have high heat conductivity. The grain size distribution of quartz sand affects the packing density, and in quartz sand having high packing density the cavity between the grains is reduced to a minimum, resulting in high heat conductivity. If the amount of quartz sand is too small the heat conductivity of the heat conducting material is decreased. The quartz sand particles are the components in the slurry with the greatest particle size, and if the amount of quartz sand is too big the amount of large grains will become too big, and the slurry will be difficult to pump since the internal friction of the slurry will increase.

Below is disclosed a table describing preferred grain size distribution ranges of the quartz sand, obtained by conducting a sieve analysis.

| Sieve, mm | Maximum mass passing each sieve as a percentage of the total mass | Minimum mass passing each sieve as a percentage of the total mass |
|---|---|---|
| 1,000 | 100 % | 95 % |
| 0,710 | 95 % | 80 % |
| 0,355 | 60 % | 35 % |
| 0,125 | 30 % | 10 % |
| 0,075 | 10 % | 0 % |

In the first preferred embodiment the powder composition comprises, in weight-% of the powder composition, 13-18 weight-% graphite. In the second preferred embodiment the powder composition comprises, in weight-% of the powder composition, 10-18 weight-% graphite. The graphite has preferably a carbon content ≥ 97%. Preferably at least 90% of the graphite has a grain size ≤ 400µm, and preferably at least 50% of the graphite has a grain size ≤ 150µm. Graphite has high heat conductivity. The graphite particles have a grain size that packs themselves well together with the other components of the inventive powder. The graphite particles increase the internal contact area between the particles of the slurry resulting in high heat conduction. If the amount of graphite is too small the internal contact area will decrease resulting in decreased heat conductivity. Graphite is an expensive material, and if the amount of graphite is too big the product price will increase significantly.

In the first embodiment the powder composition comprises, in weight-% of the powder composition, 5-8 weight-% cement. In the second embodiment the powder composition comprises, in weight-% of the powder composition, 2-8 weight-% cement. The cement is preferably of Rapid® type, which is a Portland cement according to the Cement standard EN 197-1 class CEM I 52,5 N. The Cement makes the product set over time, up to a fixed but mechanically flexible consistency, and at the same time the cement provide low viscosity to the slurry, i.e. increase the pumping ability. Portland cement compared to standard cement has a slightly lower final strength and therefor the set product allows one to make repairs without destroying the pipe. Thereto, Portland cement has a low heat development during the setting. If the amount of cement is too small the heat conducting material will having pore strength and the slurry present less good pumping ability. If the amount of cement is too big the heat conducting material will present increased strength, i.e. the installation will be permanent without any possibility for repair. Too big amount of cement will also increase the viscosity of slurry and the slurry will be hard to pump. Cement absorbs water and a big amount of cement will require the addition of greater quantity of water resulting in a lower heat conductivity of the heat conducting material.

In the first embodiment the powder composition comprises, in weight-% of the powder composition, 2-4 weight-% bentonite powder. Preferably, in the first embodiment at least 99% of the bentonite powder has a grain size ≤ 150µm. In the second embodiment the powder composition comprises, in weight-% of the powder composition, 4-10 weight-% bentonite powder. Preferably in the second embodiment at least 99% of the bentonite powder has a grain size ≤ 315µm. Thereto, the bentonite powder is preferably constituted by sodium-activated bentonite or natural bentonite. Said bentonite powder is preferably constituted by "Dantonit Bentonit"™ from Dantonit®. The swelling properties of bentonite support to homogenize the slurry and increase the pumping abilities. The swelling property will also close pipe leak, if any. If the amount of bentonite is too small the larger particles will sediment and the slurry will lose homogeneity, i.e. the set heat conducting material will present unevenly distributed heat conductivity. Thereto, the swelling properties of the slurry will be decreased. If the amount of bentonite is too big the need for water will increase resulting in a decrease in heat conductivity.

All embodiments may comprise additives, in weight-% of the powder composition, preferably in the range 0-2 weight-%. In the most preferred embodiments the powder compositions comprise no additives. Examples of additives are heat conducting agents, thickening agents, levelling agents to obtain better flowability of the slurry, curing delay agents to extend the curing time of the slurry, anti-cracking agents to prevent cracking, salt which is a swelling retarding additive, etc.

Below a few examples of inventive powder compositions are disclosed.

| | Quartz sand | Graphite | Cement | Bentonite | Additive |
|---|---|---|---|---|---|
| 1) | 80 | 10 | 5,5 | 4,5 | 0 |
| 2) | 72 | 18 | 5,5 | 4,5 | 0 |
| 3) | 74 | 16 | 2 | 8 | 0 |
| 4) | 65 | 16 | 7 | 10 | 2 (heat conducting) |
| 5) | 78 | 10 | 6 | 6 | 0 |
| 6) | 73 | 16 | 2 | 8 | 1 (thickener) |
| 7) | 74 | 16 | 8 | 2 | 0 |
| 8) | 79 | 13 | 5 | 3 | 0 |

In examples 1), 2), 3), 4), 5) and 6) a bentonite powder having a grain size ≤ 315µm was used, and in examples 7) and 8) a bentonite powder having a grain size ≤ 150µm was used.

According to the invention the slurry, with reference to its composition, comprises the following components, in weight-% of the slurry: 34-38 weight-% water, and 62-66 weight-% of the inventive powder composition.

In a preferred embodiment the water content of the slurry is about 36 weight-% of the slurry, and the powder composition content of the slurry is about 64 weight-% of the slurry.

Before mixing the powder composition with the water, for best result, it must be secured that the pH-value of the water is between 6 and 8, preferably about 7.

When the inventive slurry is mixed the viscosity of the slurry can be tested by using a Marsh Funnel (ASTM D 6910). According to a preferred embodiment the value of the Marsh Funnel test, if the slurry is prepared as stated above, is between 45 and 70 seconds, preferably about 50 seconds.

Furthermore, the slurry or heat conducting material has a water residue level, taken 24 hours after mixing, equal to or less than 8% of the original slurry. The slurry or heat conducting material, if prepared as stated above, has a thermal resistivity, taken 48 hours after mixing, between 0,4 and 0,5 mK/W, preferably about 0,44 mK/W. Thereto, it has a density between 1,60 and 1,65 kg/l, preferably about 1,61 kg/l. Measured in connection with the mixing.

The permeability of the slurry or heat conducting material is about 1E-10 m/sec.

### Feasible modifications of the Invention

It shall be pointed out that even thus it is not explicitly stated that features from a specific embodiment may be combined with features from another embodiment, the combination shall be considered obvious, if the combination is possible.

## Claims

1. A powder composition for preparing heat conducting materials, wherein the powder composition with reference to its composition comprises the following components, in weight-% of the powder composition:
| | |
|---|---|
| 65-80 | weight-% quartz sand having a grain size within the range 0-2 mm, |
| 10-18 | weight-% graphite, |
| 2-8 | weight-% cement, |
| 2-10 | weight-% bentonite powder, and |
| 0-2 | weight-% additive, |
wherein the amounts of said components together being 100 weight-%.

2. The powder composition according to claim 1, wherein the powder composition with reference to its composition comprises the following components, in weight-% of the powder composition:
| | |
|---|---|
| 70-80 | weight-% quartz sand, |
| 13-18 | weight-% graphite, |
| 5-8 | weight-% cement, |
| 2-4 | weight-% bentonite powder, and |
| 0-2 | weight-% additive, |
wherein the amounts of said components together being 100 weight-%.

3. The powder composition according to claim 1, wherein the powder composition with reference to its composition comprises the following components, in weight-% of the powder composition:
| | |
|---|---|
| 65-80 | weight-% quartz sand, |
| 10-18 | weight-% graphite, |
| 2-8 | weight-% cement, |
| 4-10 | weight-% bentonite powder, and |
| 0-2 | weight-% additive, |
wherein the amounts of said components together being 100 weight-%.

4. The powder composition according to any of claims 1-3, wherein the quartz sand has a grain size ≤ 1 mm.

5. The powder composition according to any of claims 1-4, wherein the quartz sand has a quartz content ≥ 98%.

6. The powder composition according to any preceding claim, wherein the graphite has a carbon content ≥ 97%.

7. The powder composition according to any preceding claim, wherein at least 90% of the graphite has a grain size ≤ 400µm.

8. The powder composition according to any preceding claim, wherein the cement is Portland cement.

9. The powder composition according to claim 2, wherein at least 99% of the bentonite powder has a grain size ≤ 150µm.

10. The powder composition according to claim 3, wherein at least 99% of the bentonite powder has a grain size ≤ 315µm.

11. The powder composition according to any preceding claim, wherein the bentonite powder is constituted by sodium-activated bentonite or natural bentonite.

12. A slurry for preparing heat conducting materials, wherein the slurry with reference to its composition comprises the following components, in weight-% of the slurry:
34-38 weight-% water, and
62-66 weight-% powder composition according to any of claims 1-11.

13. The slurry according to claim 12, wherein the water content of the slurry is about 36 weight-% of the slurry, and the powder composition content of the slurry is about 64 weight-% of the slurry.

14. The slurry according to claim 12 or 13, wherein the water has a pH-value between 6 and 8, preferably about 7.

## Patentansprüche

1. Pulverzusammensetzung zur Herstellung von wärmeleitenden Materialien, wobei die Pulverzusammensetzung in Bezug auf ihre Zusammensetzung die folgenden Komponenten, in Gewichts-% der Pulverzusammensetzung, umfasst:
65-80 Gewichts-% Quarzsand mit einer Korngröße im Bereich von 0-2 mm,
10-18 Gewichts-% Graphit,
2-8 Gewichts-% Zement,
2-10 Gewichts-% Bentonitpulver und
0-2 Gewichts-% Additiv,
wobei die Mengen der Komponenten zusammen 100 Gewichts-% betragen.

2. Pulverzusammensetzung nach Anspruch 1, wobei die Pulverzusammensetzung in Bezug auf ihre Zusammensetzung die folgenden Komponenten, in Gewichts-% der Pulverzusammensetzung, umfasst:
70-80 Gewichts-% Quarzsand,
13-18 Gewichts-% Graphit,
5-8 Gewichts-% Zement,
2-4 Gewichts-% Bentonitpulver und
0-2 Gewichts-% Additiv,
wobei die Mengen der Komponenten zusammen 100 Gewichts-% betragen.

3. Pulverzusammensetzung nach Anspruch 1, wobei die Pulverzusammensetzung in Bezug auf ihre Zusammensetzung die folgenden Komponenten, in Gewichts-% der Pulverzusammensetzung, umfasst:
65-80 Gewichts-% Quarzsand,
10-18 Gewichts-% Graphit,
2-8 Gewichts-% Zement,
4-10 Gewichts-% Bentonitpulver und
0-2 Gewichts-% Additiv,
wobei die Mengen der Komponenten zusammen 100 Gewichts-% betragen.

4. Pulverzusammensetzung nach einem der Ansprüche 1-3, wobei der Quarzsand eine Korngröße von ≤ 1 mm aufweist.

5. Pulverzusammensetzung nach einem der Ansprüche 1-4, wobei der Quarzsand einen Quarzgehalt von ≥ 98 % aufweist.

6. Pulverzusammensetzung nach einem der vorhergehenden Ansprüche, wobei der Graphit einen Kohlenstoffgehalt von ≥ 97 % aufweist.

7. Pulverzusammensetzung nach einem der vorhergehenden Ansprüche, wobei mindestens 90 % des Graphits eine Korngröße von ≤ 400 µm aufweisen.

8. Pulverzusammensetzung nach einem der vorhergehenden Ansprüche, wobei der Zement Portlandzement ist.

9. Pulverzusammensetzung nach Anspruch 2, wobei mindestens 99 % des Bentonitpulvers eine Korngröße von ≤ 150 µm aufweisen.

10. Pulverzusammensetzung nach Anspruch 3, wobei mindestens 99 % des Bentonitpulvers eine Korngröße von ≤ 315 µm aufweisen.

11. Pulverzusammensetzung nach einem der vorhergehenden Ansprüche, wobei das Bentonitpulver aus natriumaktiviertem Bentonit oder natürlichem Bentonit besteht.

12. Aufschlämmung zur Herstellung von wärmeleitenden Materialien, wobei die Aufschlämmung in Bezug auf ihre Zusammensetzung die folgenden Komponenten umfasst, in Gewichts-% der Aufschlämmung:
34-38 Gewichts-% Wasser, und
62-66 Gewichts-% Pulverzusammensetzung nach einem der Ansprüche 1-11.

13. Aufschlämmung nach Anspruch 12, wobei der Wassergehalt der Aufschlämmung etwa 36 Gewichts-% der Aufschlämmung beträgt und der Pulverzusammensetzungsgehalt der Aufschlämmung etwa 64 Gewichts-% der Aufschlämmung beträgt.

14. Aufschlämmung nach Anspruch 12 oder 13, wobei das Wasser einen pH-Wert zwischen 6 und 8, vorzugsweise etwa 7, aufweist.

## Revendications

1. Composition pulvérulente pour la préparation de matériaux thermoconducteurs, la composition pulvérulente comprenant, par référence à sa composition, les constituants suivants, en pourcentage en poids de la composition pulvérulente :
de 65 à 80 % en poids de sable de quartz présentant une granulométrie située dans la plage allant de 0 à 2 mm,
de 10 à 18 % en poids de graphite,
de 2 à 8 % en poids de ciment,
de 2 à 10 % en poids de poudre de bentonite, et
de 0 à 2 % en poids d'additif,
les quantités desdits constituants représentant au total 100 % en poids.

2. Composition pulvérulente selon la revendication 1, la composition pulvérulente comprenant, par référence à sa composition, les constituants suivants, en pourcentage en poids de la composition pulvérulente :
de 70 à 80 % en poids de sable de quartz,
de 13 à 18 % en poids de graphite,
de 5 à 8 % en poids de ciment,
de 2 à 4 % en poids de poudre de bentonite, et
de 0 à 2 % en poids d'additif,
les quantités desdits constituants représentant au total 100 % en poids.

3. Composition pulvérulente selon la revendication 1, la composition pulvérulente comprenant, par référence à sa composition, les constituants suivants, en pourcentage en poids de la composition pulvérulente :
de 65 à 80 % en poids de sable de quartz,
de 10 à 18 % en poids de graphite,
de 2 à 8 % en poids de ciment,
de 4 à 10 % en poids de poudre de bentonite, et
de 0 à 2 % en poids d'additif,
les quantités desdits constituants représentant au total 100 % en poids.

4. Composition pulvérulente selon l'une quelconque des revendications 1 à 3, dans laquelle le sable de quartz présente une granulométrie ≤ 1 mm.

5. Composition pulvérulente selon l'une quelconque des revendications 1 à 4, dans laquelle le sable de quartz présente une teneur en quartz ≥ 98 %.

6. Composition pulvérulente selon l'une quelconque des revendications précédentes, dans laquelle le graphite présente une teneur en carbone ≥ 97 %.

7. Composition pulvérulente selon l'une quelconque des revendications précédentes, dans laquelle au moins 90 % du graphite présente une granulométrie ≤ 400 µm.

8. Composition pulvérulente selon l'une quelconque des revendications précédentes, dans laquelle le ciment est du ciment de Portland.

9. Composition pulvérulente selon la revendication 2, dans laquelle au moins 99 % de la poudre de bentonite présente une granulométrie ≤ 150 µm.

10. Composition pulvérulente selon la revendication 3, dans laquelle au moins 99 % de la poudre de bentonite présente une granulométrie ≤ 315 µm.

11. Composition pulvérulente selon l'une quelconque des revendications précédentes, dans laquelle la poudre de bentonite est constituée par de la bentonite activée au sodium ou de la bentonite naturelle.

12. Suspension pour la préparation de matériaux thermoconducteurs, dans laquelle la suspension comprend, par référence à sa composition, les constituants suivants, en pourcentage en poids de la suspension :
de 34 à 38 % en poids d'eau, et
de 62 à 66 % en poids de la composition pulvérulente selon l'une quelconque des revendications 1 à 11.

13. Suspension selon la revendication 12, dans laquelle la teneur en eau de la suspension est d'environ 36 % en poids de la suspension, et la teneur en composition pulvérulente de la suspension est d'environ 64 % en poids de la suspension.

14. Suspension selon la revendication 12 ou 13, dans laquelle l'eau présente une valeur de pH comprise entre 6 et 8, de préférence d'environ 7.
